# EUROPEAN PATENT APPLICATION

(11) **EP 0 902 118 A1**
(43) Date of publication of application: **17.03.1999**
(21) Application number: 98307339.6
(22) Date of filing: 10.09.1998
(51) Int. Cl.: D06F 95/00, B65G 47/00

(54) **Garment finishing system**

(30) Priority: 10.09.1997 GB 9719286
(71) Applicant: Everett Developments Ltd., Hardrow, North Yorkshire DL8 3LZ (GB)
(72) Inventor: Everett, Nicholas Wynne, North Yorkshire DL8 3LZ (GB)
(74) Representative: Hamilton, Alistair

(57) **Abstract**

A garment finishing system in which a garment is carried on one of a plurality of carriers (12) between multiple processing stations, at each of which stations a finishing operation is carried out on the garment. The carriers (12) are supported upon a track (10) along which they can travel between processing stations. Garments are loaded onto the carriers (12) at a loading station, and are then carried to successive processing stations at which finishing operations such as pressing, steaming, and folding are carried out. Garments are released from the carriers at an unloading station.

## Description

The present invention relates to a garment finishing system.

During garment manufacture, it is normally necessary to subject a garment to a number of finishing steps after it has been sewn. For example, such steps may include a finish pressing process in which wrinkling of the material of the garment is minimised, this being necessary to give the garment the required finish. This is particularly the case for jeans, which are normally washed to produce a faded colour in the fabric after the garment is sewn. Additionally, it is often necessary to attach labels to the garments, and to inspect them as part of quality control.

Hitherto, finishing has normally been achieved by carrying the garments manually between stations at which operations are carried out. Largely, each operation has been dome independently, as a separate step, rather than as part of a unified production process.

In the case of jeans, and some other garments, a finishing of the garment must produce a smooth appearance, but it is not desirable to create a crease in the garment. In such cases, it is known to include in the finishing process an air-form step. In air-form finishing, air and/or steam is blown into the garment under pressure such that the garment is "blown up" with its material under tension.

A known air-form finisher comprises a self-contained unit having a body mounted on a column. The body includes apparatus necessary for generating steam and air streams which can be directed through an outlet duct. The outlet duct is adapted to allow a waistband to be secured around it. The finisher further comprises a pair of clamps each of which grips an end part of a respective leg of the garment. The clamps form a seal against a free flow of steam or air, as the case may be, through the legs. The clamps can also be arranged to exert a pulling force away from the outlet duct so that the material of the garment can be placed under tension.

While such known finishers produce an entirely satisfactory finish, they are not altogether convenient on use. Each garment must be separately applied to and removed from the machine one-by-one. This sequence of operation further diminishes the extent to which finishing can be carried out as an integrated process.

It is an aim of the present invention to provide a garment system which substantially increases the ease and speed with which the entire finishing process can be carried out.

According to a first of its aspects, the invention provides a garment finishing system in which a garment is carried on a carrier between multiple processing stations. This allows the stations to be constructed and selected to meet particular finishing requirements.

The carrier may be supported for movement along a track, which may form a continuous loop.

A multiplicity of carriers may be present on the track at any one time. Several garments may undergo separate finishing steps at various processing stations simultaneously.

Advantageously, the carriers do not include active components such as pneumatic cylinders. Such active components may be provided at fixed stations to interact with garment carriers.

Stations may be provided for, amongst other operations, pressing, steam treatment, drying, inspection and labelling.

The system preferably is driven pneumatically under the control of a programmable controller.

An embodiment of the invention will now be described in detail, by way of example, with reference to the accompanying drawings in which:
Figure 1 is a schematic general view of a garment finishing system embodying the invention;
Figure 2 is a view of a plurality of garment hangers and a section of a supporting rail, being parts of the embodiment of Figure 1;
Figures 3 and 4 are more detailed views of first and second alternative garment carriers, being components of the system of Figure 1;
Figure 5 shows the garment carrier of Figure 4 art a loading station of the system; and
Figure 6 shows a view similar to that of Figure 5, but with some components omitted for clarity;
Figures 7 and 8 show two alternative constructions of a loading station;

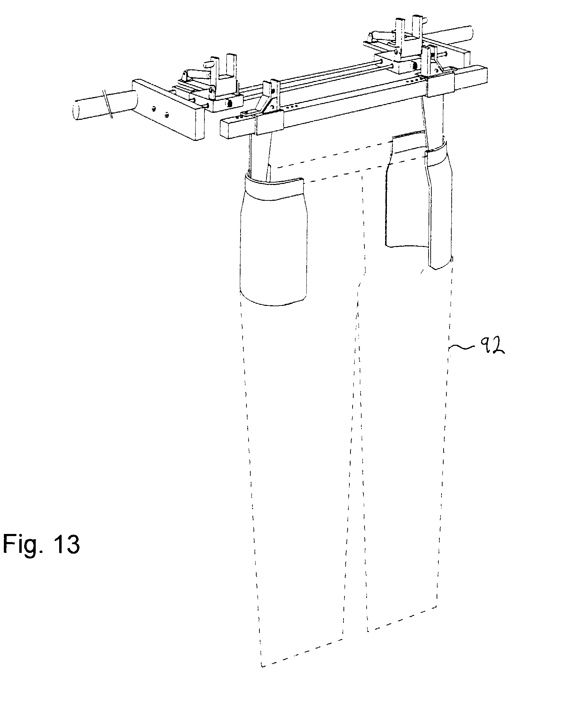

Figures 9 to 13 illustrate the sequence of operation of the garment carrier of Figures 3 and 4 at a loading station of Figure 5;
Figure 14 shows an arrangement whereby a garment carrier can be moved along a track in a system embodying the invention;
Figure 15 shows a general arrangement of a finishing cabinet being part of a system embodying the invention;
Figure 16 shows, in greater detail, a steam finishing station within the cabinet of Figure 15;
Figure 17 illustrates an alternative cuff clamp for use in the station of Figure 16;
Figure 18 shows a modification to the station of figure 16, intended to take advantage of the garment carrier of Figure 4;
Figures 19a to 19e show the sequence of operation of the station of Figure 17;
Figure 20 shows a modification to a duct of the station of Figure 17;
Figure 21 shows an inspection station being part of a system embodying the invention;
Figures 22a and 22b show an alternative arrangement of an inspection station;
Figure 23 shows a labelling station being part of a system embodying the invention;
Figures 24 and 25 show an unloading station being part of a system embodying the invention respectively immediately before and immediately after unloading;
Figures 26a to 26c are perspective and side views of a detail of a garment carrier for use with the present invention;
Figures 27 and 28 show a garment carrier adapted for use in a system embodying the invention, adapted to carry a shirt;
Figures 29 and 30 illustrate a linkage for controlling movement of carriages being part of a loading station in a system embodying the invention; and
Figures 31 and 32 show in greater detail part of a loader carriage assembly.

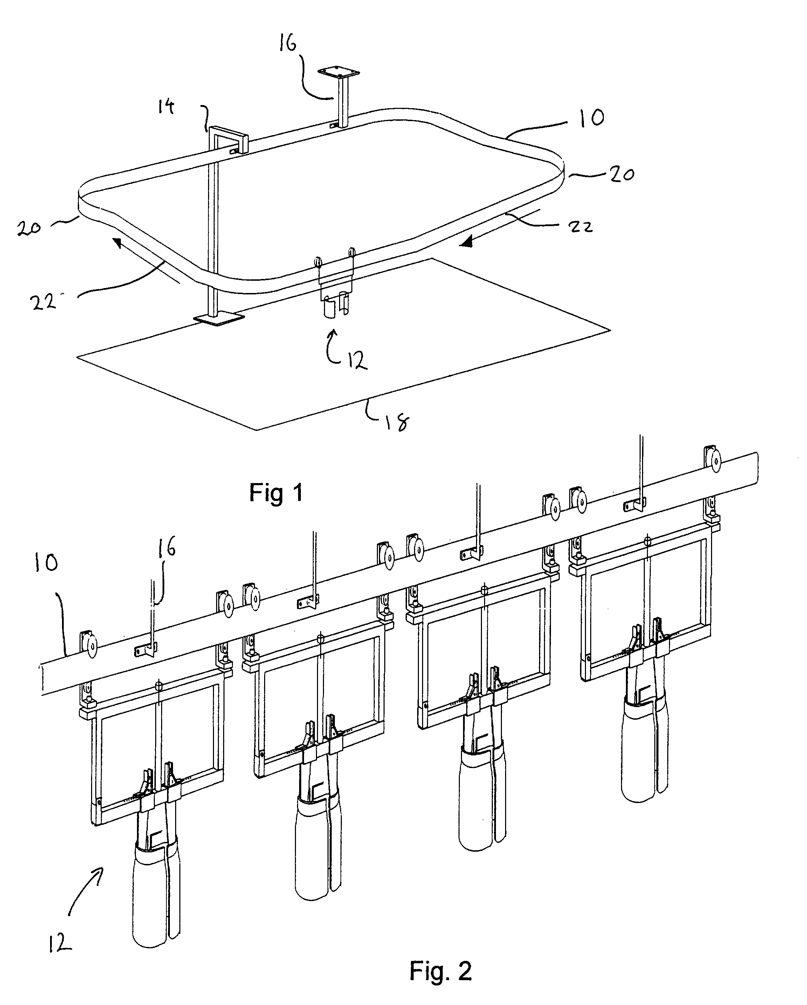

With reference first to Figures 1 and 2, a garment finishing system embodying the invention comprises a track 10 supported above head hight in a workspace 18. The track 10 is supported by a plurality of supports which may be mounted on a floor, as at 14, on a ceiling, as at 16, or on a wall or any other suitable structure. The track 10 forms a continuous loop. It may include curves (as at 20) or slopes (as at 22).

A plurality of garment carriers 12 are supported on the track 10. The garment carriers (which will be described in detail below) 12 can travel along the track 10. A garment mounted on a carrier 12 can be moved along the track 10 to carry it between stations at which finishing operations can be carried out.

The track 10 can be formed as a metal tube. A upper and lower surfaces of the tube is formed with rounded profiles to constitute running surfaces for the carriers 12.

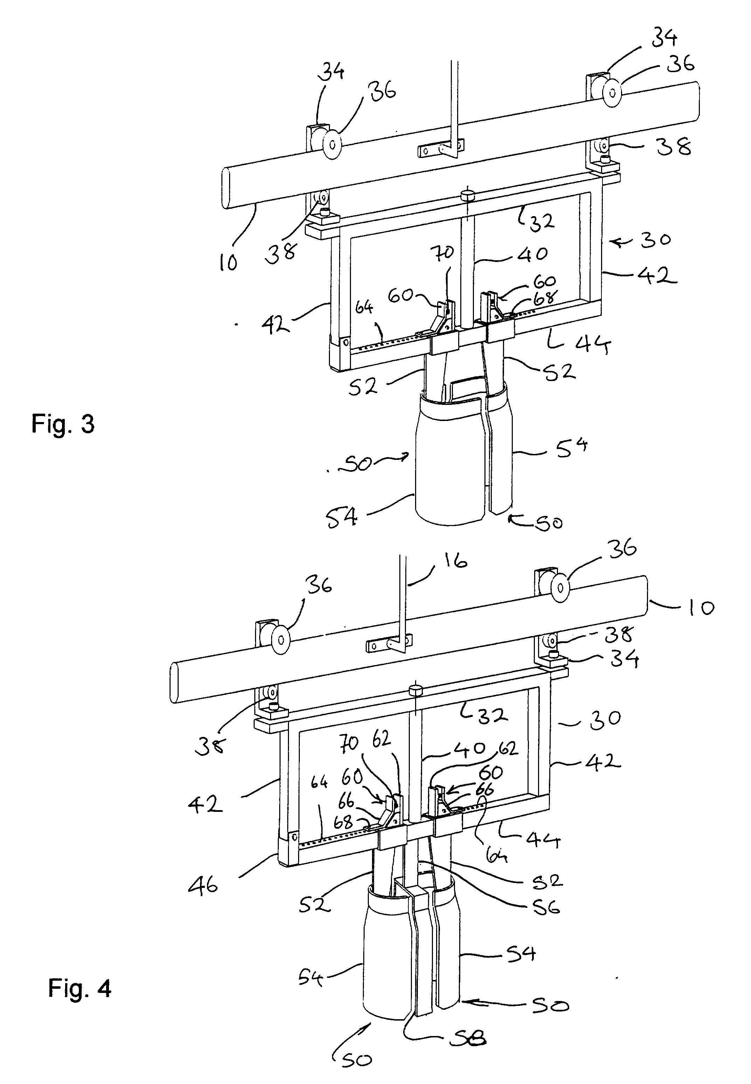

With reference now to Figure 3, each garment carrier comprises a frame 30 formed as a fabrication of square-section steel tube. The frame 30 has an upper member 32 at opposite end regions of which is attached a pair of supporting brackets 34. Each supporting bracket 34 carries a pair of rollers 36,38 which are secured to the supporting bracket 34 for rotation about respective spaced, parallel axes. The rollers are disposed such that, in use, an upper roller 36 is carried on the upper surface of the track 10 while a lower roller 38 lies close to the lower surface of the track 10. The rollers 36,38 have a profile which is complementary with the corresponding surfaces of the track 10. Thus, the upper rollers 36 of the two supporting brackets 34 carry the weight of the garment carrier 12 and any garment carried on it, while the lower rollers resist removal of the garment carrier 12 from the track 10. The supporting brackets 34 are disposed such that they support the upper member 32 substantially parallel to the track 10.

The frame further includes a central shaft 40 which is carried on the upper member 32 such that it is rotatable about its own axis. The central shaft 40 extends from a mid-point of the upper member 32 in a direction generally away from the track 10.

A pair of fixed frame members 42 extend from the upper member 32, at a position adjacent a respective one of the supporting brackets 34, in a direction parallel to the central shaft 40. The lengths of the fixed frame members 42 and the central shaft 40 are substantially the same.

The frame 30 is completed by a lower member 44 which is attached to the central shaft 40. The lower member 44 extends parallel to the upper member 32. The length of the lower member 44 is such that it extends between the fixed frame members 42. The lower member 44 can rotate with the central shaft 40. A plurality of regularly spaced apertures 64 are formed in an upper surface of the lower member 44.

One or both of the fixed frame members 42 carries a locking device 46. The locking device 46 is pivotally attached to the fixed frame member 42 such that in a first position (as shown in Figures 3 and 4) it can surround an end portion of the lower member 44, thereby to prevent rotation of the lower member 44. The locking device 46 can also be pivoted such that it is clear of the lower member 44, thereby allowing it to rotate.

A pair of garment supports 50 are disposed on the lower member 44 symmetrically about the central shaft 40. Each garment support 50 comprises a supporting arm 52 which is carried on the lower member 44 of the frame 30. The supporting arm 52 is slidable along the lower member 44. A plate 54 is fixed to the supporting arm 52. The plate has a curved profile which is generally C-shaped when viewed in plan, the profile being chosen to conform with the shape of a waistband of a garment.

In the arrangement shown in Figure 4, an additional frame member 56 projects from the lower member 44 coaxially with the central shaft 40 in a direction away from the upper frame member 32. A plate member 58 is fixed to the additional frame member 56. The plate member 58 has a profile which is similar to that of the adjacent plates 54. The purpose of the plate member 58 is to provide support for a central region of a garment irrespective of the position of the garment supports 50.

A bracket 60 projects from the supporting arm 52 of each garment carrier. The bracket 60 projects generally towards the upper member 32. The bracket comprises a pair of spaced parallel plates. A first of the plates 62, being the nearer to the central shaft 40, is fixed with respect to the supporting arm 52, and extends generally towards the upper member 32.

A second of the plates 66 is formed in three sections, each angles at 45° to the next, such that opposite end portions of the plate 66 are normal to one another. A first end portion of the second plate 66 extends parallel to and spaced from the first plate 62. The opposite second end portion extends close to and parallel to the lower member 44. The intermediate porion is mounted to the supporting arm 52 by a support which permits limited pivotal movement of the plate 66 about an axis transverse to the lower member 44.

A locking peg 68 projects from the second end portion of the second plate 66 towards the lower member 44. The extent of pivotal movement of the second plate 66 is such that the locking peg 68 can selectively enter into or be withdrawn from any one of the apertures 64 in the lower member 44. While the locking peg 68 is within an aperture 64, sliding movement of the garment support 50 on the lower member 44 is prevented. A compression spring 70 is disposed between the plates to urge the second arm 66 to pivot so as to urge the locking peg 68 into an aperture 64.

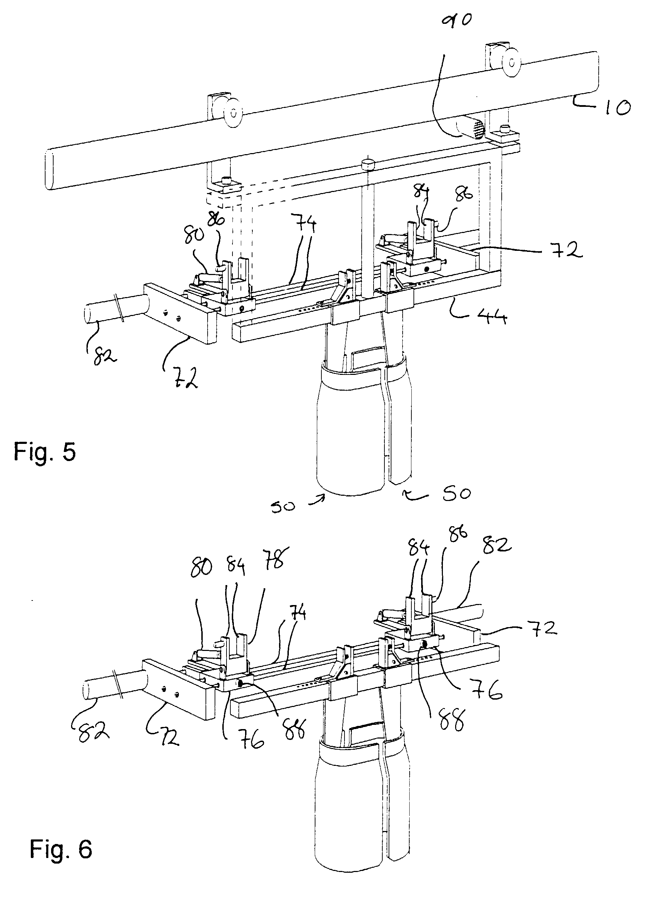

In order to reduce complexity of the system as a whole, the garment carriers 12 do not themselves carry active components needed to operate the garment support. The active components are instead disposed at fixed loading stations. This means that the garment carriers themselves are relatively simple assemblies. With reference now to Figures 5 and 6, the garment carrier of Figure 3 is shown at such a loading station.

The loading station comprises first and second support members 72 mounted on any suitable foundation (not shown) such as a floor or a wall stand. A pair of spaced parallel rods 74 extend between the support members. The rods 74 extend substantially parallel to the track 10.

A pair of operating assemblies are slidably mounted on the rods 74. Each operating assembly comprises a carriage 76 on which is carried an arm 78. The arm 78 is pivotable with respect to the carriage 76 about an axis which is generally parallel with the rods 74. An pneumatic arm control cylinder 80 operates between the carriage and the arm 78 in order to drive the arm between a substantially vertical rest position (as shown in Figures 5 and 6) and a horizontal active position.

A pneumatic carriage cylinder 82 is mounted on each support member 72. The carriage cylinder 82 has an operating arm which is connected to the carriage 76 in order to drive it along the rods 74.

The arm 78 comprises two spaced, parallel plate members 84. Mutually facing surfaces of the plate members are spaced apart by a distance slightly grater than the spacing between the plates 62,66 of the bracket 60. The plate member remote from the mid-point of the rods 74 carries a pneumatic unlocking cylinder 86. The unlocking cylinder has an operating rod which can be driven controllably towards the other plate member 84.

A bracket sensor 88 for detecting the proximity of a bracket 60 is carried on the carriage 76. The bracket sensor 88 may operate optically, magnetically or by any other suitable means. It may be a mechanically operated switch. Its purpose is to determine when the carriage 76 is adjacent to a bracket 60, and it is clear that there are many devices which can readily achieve this.

A carrier sensor 90 is provided in a fixed location, it purpose being to determine the proximity of a garment carrier 12 to the loading station. Once again, there are many suitable sensors readily available.

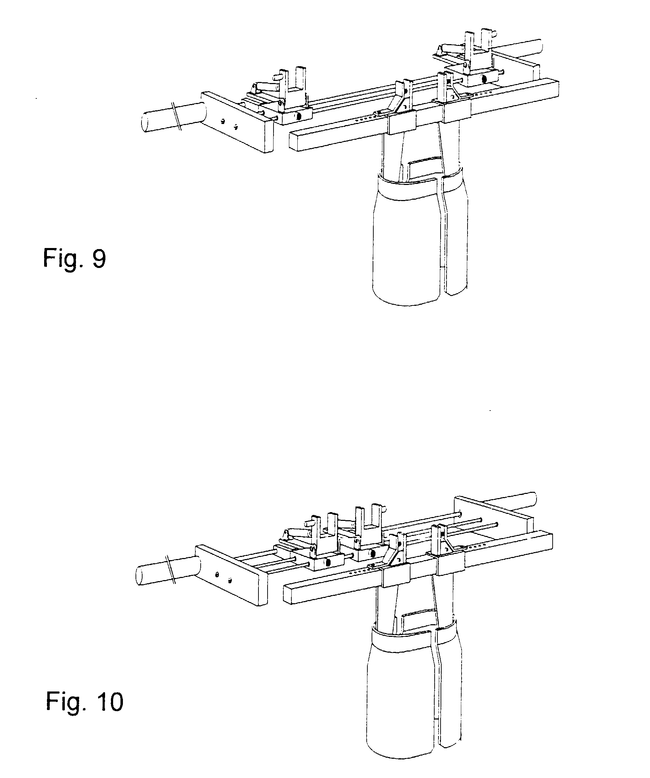

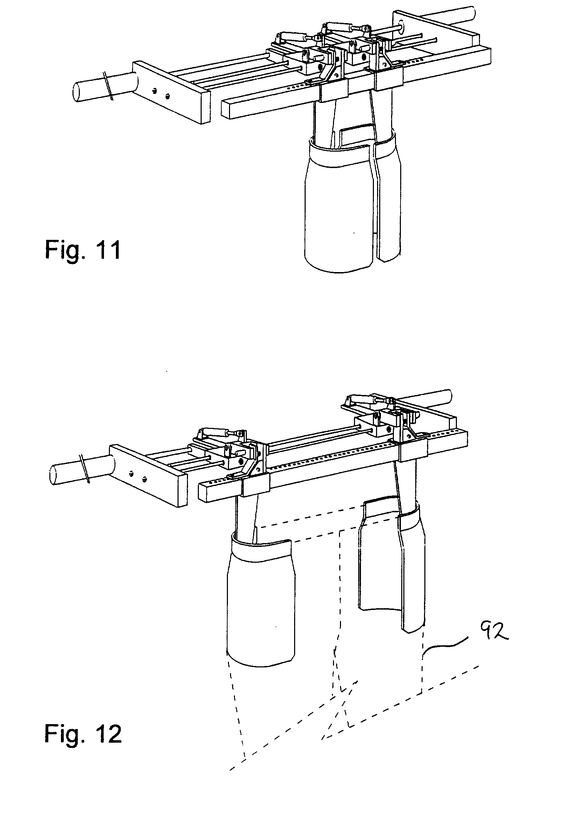

In order to load a garment onto a carrier 12, the carrier 12 is moved to a loading station, it position being finally determined by the carrier sensor 90. Starting with the arms 78 in the rest position, and the carriages 78 in and the brackets 60 in an arbitrary position (see Fig. 9), each of the carriages 76 is moved along the rods 74 by the carriage cylinder 82 until its bracket sensor 88 determines that it is opposite a bracket (as shown in Figure 10). At that time, the arm 75 is moved by the arm control cylinder 80 to its active position (illustrated in Figure 11). The plates 62,66 of the bracket 60 are, in this condition, disposed between the plate members 84 of the arm.

Subsequently, the unlocking cylinder 86 is operated. This displaces the second plate member 66 of the bracket 60 against the action of the spring 70 to remove the locking peg 68 from the apertures 64. The carriage 76 can then be driven by the carriage cylinder 82 with the result that the garment support 50 will be driven along the lower member 44. Each garment support 50 is driven in this manner towards the centre of the lower member 44 (assuming that it is not already there).

With the garment supports 50 centralised, the waistband of a garment 92, such as a pair of jeans, can be placed around the garment supports 50. The carriage cylinders 82 are then operated to urge the garment supports away from the centre of the lower member 44. This places the waistband of the garment 92 under tension, and so grips the garment, as shown in Figure 12.

The unlocking cylinders 86 are then deactivated, to allow the locking peg 68 to drop into the nearest aperture 64. The arm control cylinder 80 is then operated to withdraw the arm 78 to its rest position. The locking pegs 68 prevent movement of the garment supports 50, such that the garment 92 is retained on the carrier 12. The carrier 12 can then be moved along the track 10 from the loading station, taking the garment 92 with it.

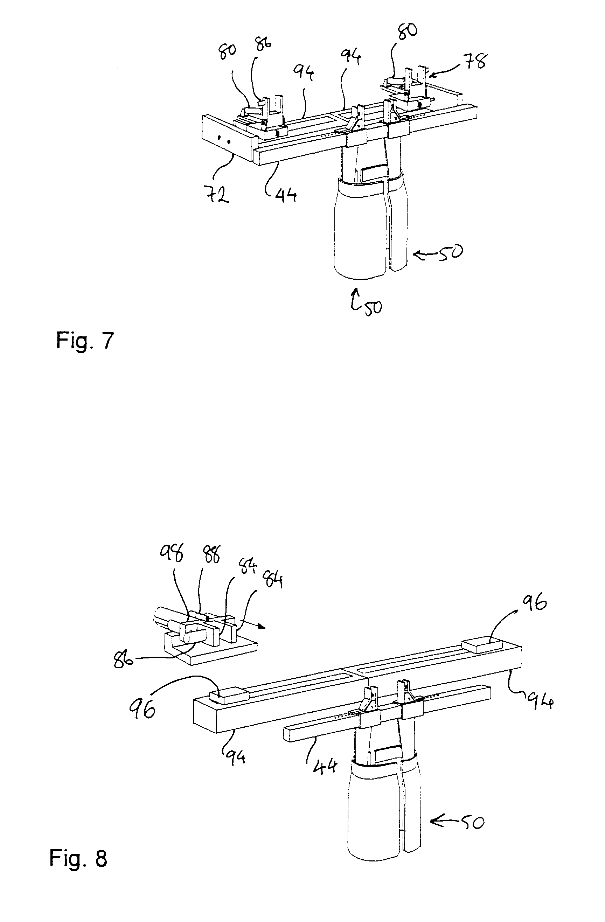

A minor modification to the construction of the loading station is shown in Figures 7 and 8. In this construction, each carriage 76 is carried on the piston 96 one of a pair of rodless cylinders 94. Thus, the need to provide separate rods 74 and associated bushes in the carriages is avoided.

A further modification is shown in Figure 8 only. In this arrangement, a pair of plate members 84, one carrying the unlocking cylinder 86 project from a backing member 98. The backing member is secured to an actuating rod of a pneumatic control cylinder 100. Actuation of the control cylinder 100 causes linear movement of the plate members 84 from a withdrawn rest position to an extended active position. In this way, the plate members 84 can operate in a manner substantially similar to the plate members 84 of the arm 78 described above.

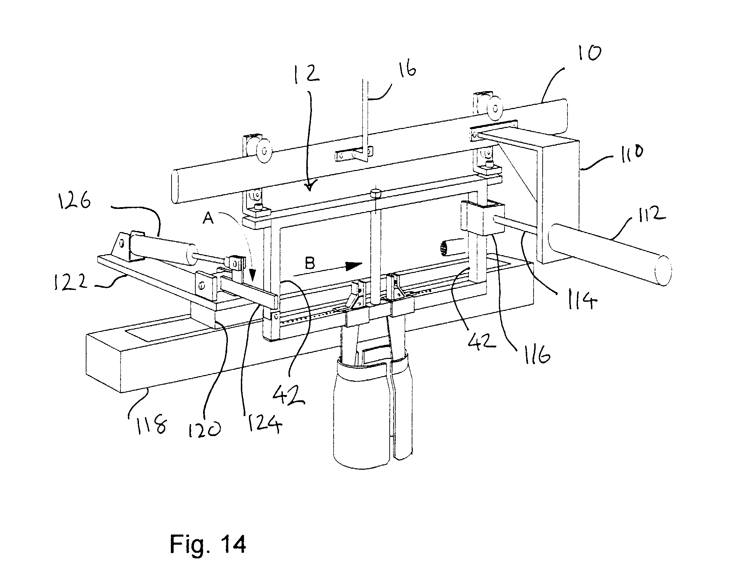

Turning now to Figure 14, there is shown an indexing station whereby garment carriers 12 can be driven along the track 10.

The indexing station includes a locking assembly comprising a bracket 110 secured to the track 10. The bracket 110 carries a pneumatic locking cylinder 112 which has an operating arm 114 disposed substantially normal to the extent of the track 10. The operating arm 114 carries on its free end a fork 116 of U-shaped section. As shown in Figure 14, the operating arm 114 is extended such that the fork engages and partially surrounds an fixed frame member 42 of the garment carrier 12. This prevents unintentional movement of the garment carrier moving along the track 10. The operating arm 114 can be withdrawn, such that the fork 116 clears the garment carrier 12 to allow it to move freely.

The indexing station further includes a drive assembly comprising a rodless drive cylinder 118 disposed below the track 10 and parallel to it, such that the drive cylinder lies adjacent to a garment carrier 12 retained by the locking assembly. The drive cylinder 118 has a piston 120 on which is fixed a support arm 122. The support arm 122 extends from the piston transversely away from the garment carrier 12.

A drive finger 124 is carried on the support arm 122 close to the piston 120. The drive finger 124 is pivotally mounted such that it can be pivoted between an operative position (as shown in Figure 14) and an inoperative position. In the operative position, the drive finger 124 extends such that it projects into the path of a garment carrier 12 which is suspended from the track 10. In the inoperative position, the drive finger 124 is withdrawn such that a garment carrier 12 could move freely past it. The position of the drive finger 124 is controlled by a pneumatic cylinder 126 which is carried on a remote portion of the support arm 122.

An operational cycle starts with the operating arm 114 and the drive finger 124 both withdrawn. When a garment carrier 12 arrives at the indexing station, the locking cylinder 112 is activated to retain it until it is to move on. The drive finger 124 is then activated (moving in the direction of Arrow A) in readiness. Once the garment carrier 12 is to be moved, the locking cylinder 112 is deactivated and the fork 116 is withdrawn. The rodless cylinder 118 is then activated to drive its piston 120, and the drive finger 124 carried on it in the direction of movement of the garment carrier 12 (Arrow B). The garment carrier 12 is contacted by the drive finger 124, and is thereby urged along the track 10.

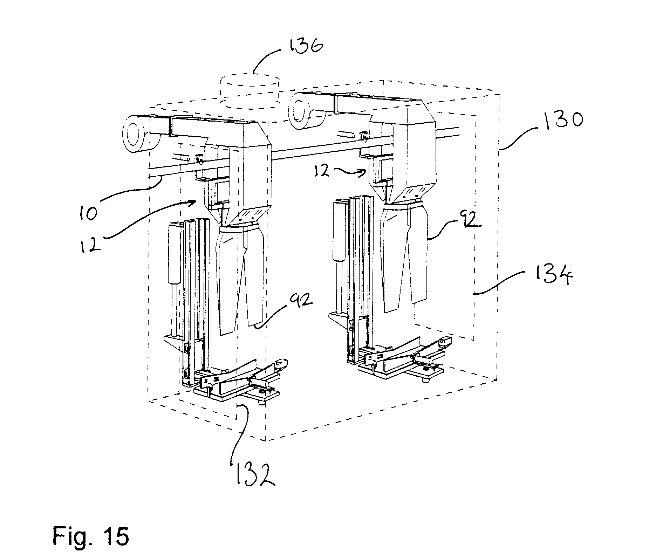

With reference now to Figure 15, a finishing cabinet 130 has an entrance 132 and an exit 134. The track 10 passes through the entrance 132, into the cabinet 130, and out through the exit 134. Thus, a garment 92 on a garment carrier 12 can pass into and through the cabinet 130.

The cabinet 130 contains a plurality of finishing stations, which will be described below. The cabinet has air and steam extraction apparatus 136 to prevent pollution of it environment with steam and hot drying air.

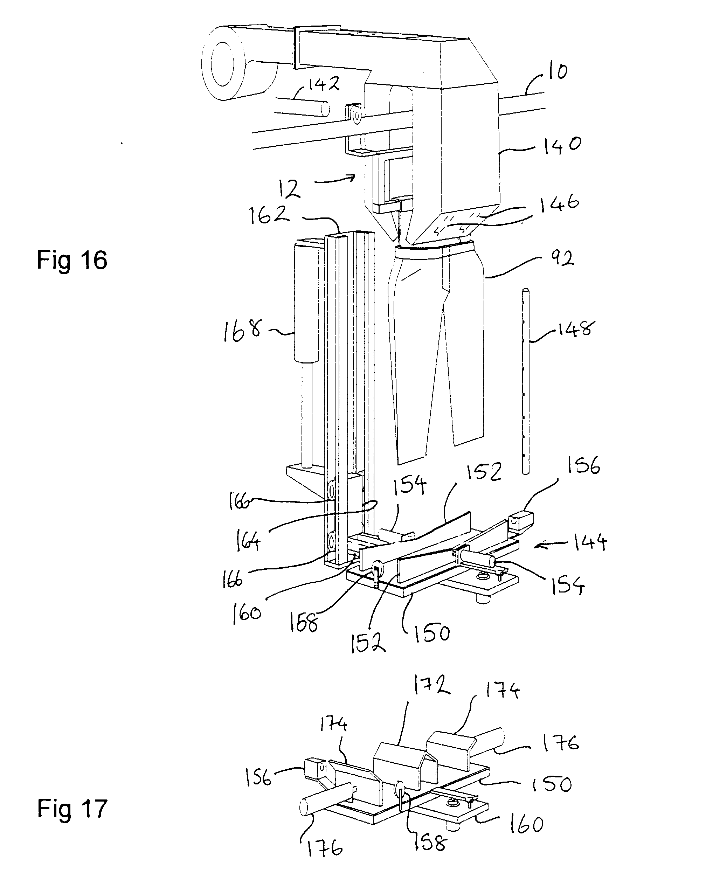

Figure 16 shows a steam finishing station which could suitable be housed within the cabinet 130 of Figure 15. The steam finishing station includes a duct 140 which is positioned to drive steam or hot air into the waist of a garment 92 which has arrived in the station on a garment carrier 12. At least a portion of the duct 140 surrounds the track 10 and a garment carrier 12 carried on the track 10 to ensure even distribution of steam within the garment. Steam can also be directed onto the garment 92 from steam nozzles 146 on the duct 140, and from external steam sprayers 146.

A sensor 142 is provided to detect the arrival of a garment carrier 12. The steam finishing station also comprises an indexing station, not shown in Figure 16, as described with reference to Figure 14, the indexing station being controlled by the sensor 142.

The steam finishing station further includes a cuff clamp 144 by means of which end portions of garment legs can be clamped during steaming.

The cuff clamp 144 comprises a platform 150 on which is mounted a pair of parallel clamping plates 152 which extend substantially parallel to the track 10. The clamping plates 152 can be moved towards and away from one another under the control of a pair of pneumatic clamping plate cylinders 154. An optical detector 156 and reflector 158 are carried on the platform 150. The detector 156 and the reflector 158 are positioned so as to be capable of detecting an article placed between the plates 152.

A vertical track 162 is disposed approximately beneath the duct 140. A truck 164 borne on rollers 166 is contained by the track such that it can move vertically along it. Movement of the truck is controlled by a vertical pneumatic cylinder 168. A support arm 160 projects laterally from the truck 164. The platform 150 is carried on the support arm 160 such that it can be raised and bowered by it.

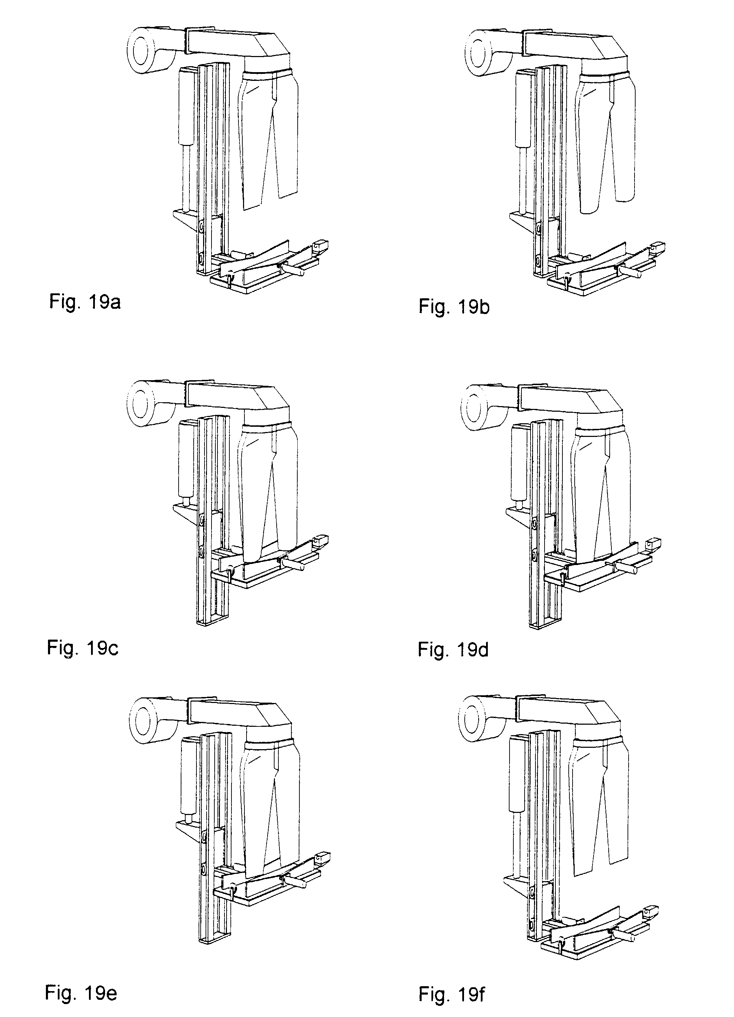

In operation, the support arm 160 starts at its lowermost position and the clamping plates 152 are spaced apart. When a garment carrier 12 is received and secured by the indexing station (see Fig 19a), air is blown along the duct 140 to inflate the garment 92 (Fig 19b). The vertical cylinder 168 is then operated to raise the platform 150 (Fig 19c). Eventually, lower ends of the garment legs will be detected by the optical detector 156, whereupon upward movement is stopped. The clamping plates 152 are then brought together to clamp the garment leg cuffs, in preparation for steaming (Fig 19d). Following steaming, the clamping plates 152 are withdrawn (Fig 19e) and the vertical cylinder 168 is operated to lower the platform 150 (Fig 19f).

In some cases it is desirable to steam the garment with its material under tension. In such cases, the platform can be lowered slightly after the clamping plates 152 have clamped the garment 92.

It will be understood that the above-described arrangement automatically adjusts for variation in the length of legs of the garment.

As will be understood from the forgoing, the station illustrated in Figure 16 clamps along a line parallel to the track 10. Figure 17 shown an alternative clamping arrangement in which clamping takes place along two spaced parallel lines normal to the track.

In this arrangement, the platform 150 carries a central clamping block 172 which has a pair of clamping faces directed away from one another. Each clamping face is faced by a respective clamping plate 174 which can be moved towards and away from the clamping block 172 by a respective clamping cylinder 176. An optical detector 156 and a reflector 158 are provided to detect a garment part moving into the space between a clamping plate 174 and the clamping block 172.

Thus, a cuff of each of each leg of a garment can be clamped between a respective clamping plate 174 and the clamping block 172. Otherwise, operation of the station is as described with reference to Figure 16.

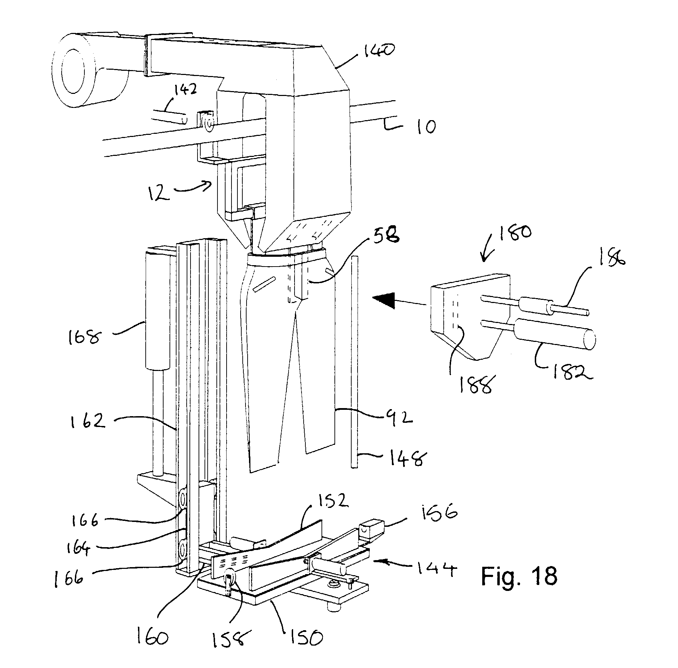

Figure 18 illustrates a modification to the finishing station of Figure 16. The station additionally comprises a pressing head 180 which can be urged by a cylinder 182 towards a fly area of a garment 92 carried on a garment carrier 12. A sliding support 186 is provided to ensure linear travel of the pressing head 180. The additional plate member 58 provided in the garment carrier of Figure 4 provides a support against which that area of the garment can be pressed. Steam may be supplied to the pressing head 180 to be ejected towards the garment through nozzles 188.

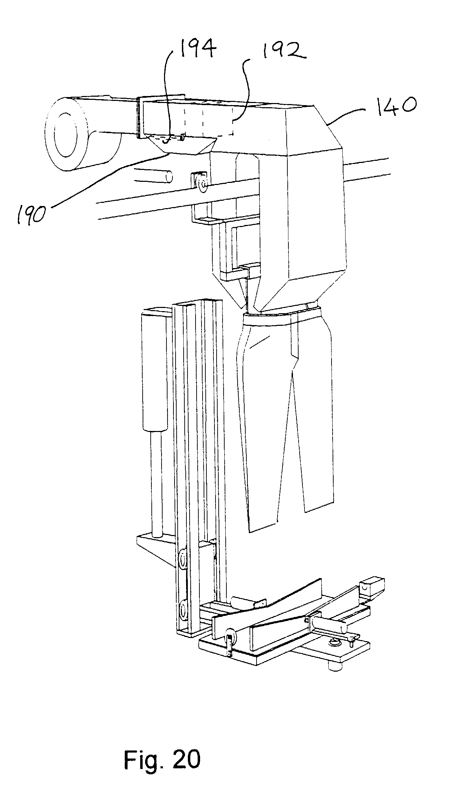

In finishing some garments, it is desirable to cool the garment following application of steam and/or hot air. Turning now to Figure 20, the station of figure 6 can be modified by fitting into the duct a bypass passage through which air can optionally be passed to avoid its passing through a heating element 192. Air flow can be selectively directed through the bypass duct 190 or through the heating element 192 by an electrically operated baffle 194.

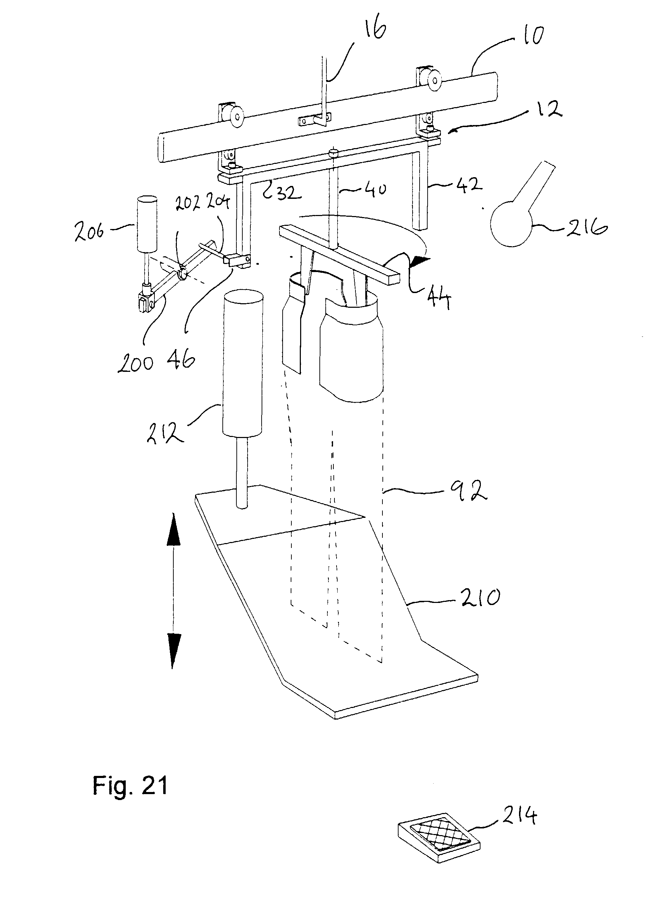

An inspection station will now be described with reference to Figure 21.

The purpose of the inspection station is to permit a garment 92 to be inspected readily by an operator. To this end, the garment is received on a garment carrier 12 at a convenient working height, which will normally mean that the track 10 is lower in the inspection station than in other parts of the system. Optionally, an indexing station is provided at the inspection station.

In order to allow an operator to inspect all parts of the garment, it will normally be the case that the locking device 46 of the carrier 12 will be released to allow the lower member 44, and thus the garment 92, to rotate about the central shaft 40. In a simple embodiment, the operator simply releases the locking device 46 manually. Alternatively, and as illustrated, there is provided an automated device. In this embodiment, a lever 200 is pivotally mounted about a mid point at 202. A lifting finger 204 projects from the lever 200 near to one of its ends, to engage and lift the locking device 46. Near the opposite end of the lever 200, an operating rod of a pneumatic cylinder 206 is connected to the lever 200. Movement of the lever 200 under the control of the cylinder 206 therefore indirectly locks or unlocks the locking device 46.

Within the inspection station, a lower part of the garment is typically supported on an inspection platform 210. The inspection platform 210 can be adjusted in height in order to present the garment to the operator at a convenient height. Height adjustment can be achieved through a pneumatic lifting cylinder 212. A foot control 214 is provided whereby the operator can raise or lower the platform 210 as desired and, if appropriate, close and release the locking device 46.

In most embodiments, a plurality of lights 216 will be provided to illuminate the garment 92 in the inspection station.

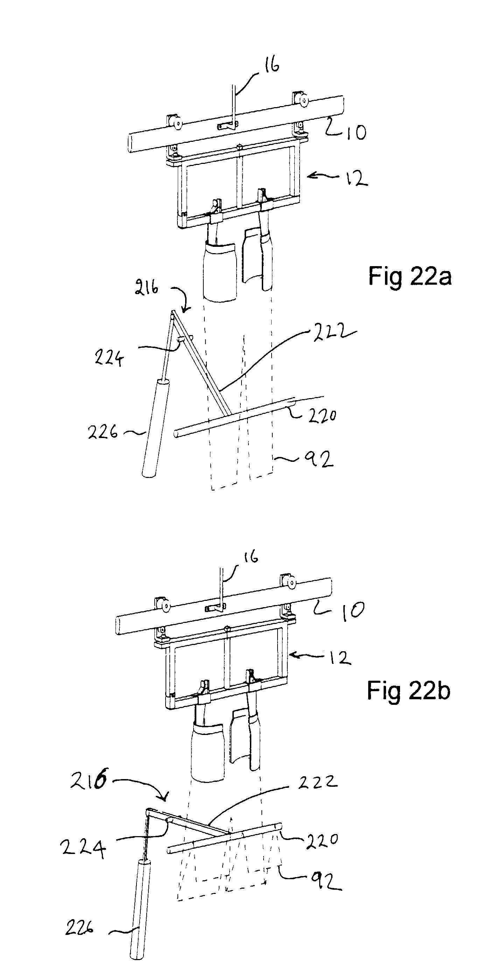

In the inspection station of Figures 22a and 22b, there is provided a lifting bar 218 in place of the inspection platform 210. The lifting bar 210 comprises a T-shaped metal construction having a crossbar 220 of round section connected at its central point to an end of an upright 222 of square section. The crossbar 220 extends generally parallel to the track 10.

The upright 222 is pivoted about an axis 224 parallel to the crossbar 220. The axis 224 is disposed approximately three-quarters of the length of the upright 222 from the crossbar 220. Close to the end opposite the crossbar 220, the upright 222 is connected to an actuating rod of a lifting cylinder 226.

In a rest position, the lifting bar 218 adopts the position shown in Figure 22a. In this position, a garment 92 can pass between it and an operator. On actuation of a control by an operator, the lifting cylinder 226 causes the lifting bar 216 to pivot, such that the crossbar 220 lifts and moves towards the operator. In doing this, the crossbar 220 will lift the legs of the garment 92, and present them to the operator for inspection.

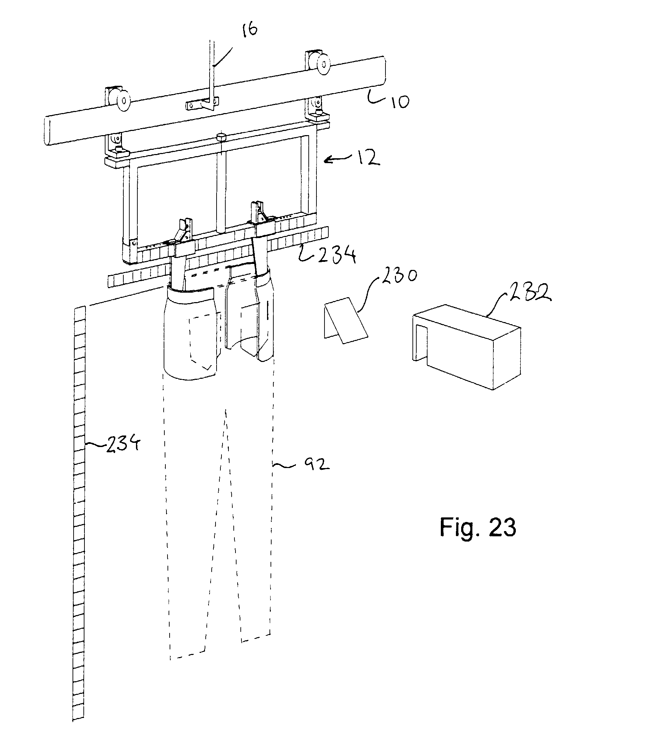

With reference to Figure 23, a labelling station presents a garment 92 to an operator at a position in which a label 230 can be conveniently attached by suitable labelling apparatus 232. Furthermore, measuring scales 234 may be provided next to the legs and the waistband of the garment so that the operator can verify that the garment 92 is correctly sized, so that the correct labels can be applied.

A garment can be removed from a carrier by an operator manually releasing the locking peg and sliding the garment support to remove tension at the waistband. Alternatively, this operation may be automated at an unloading station.

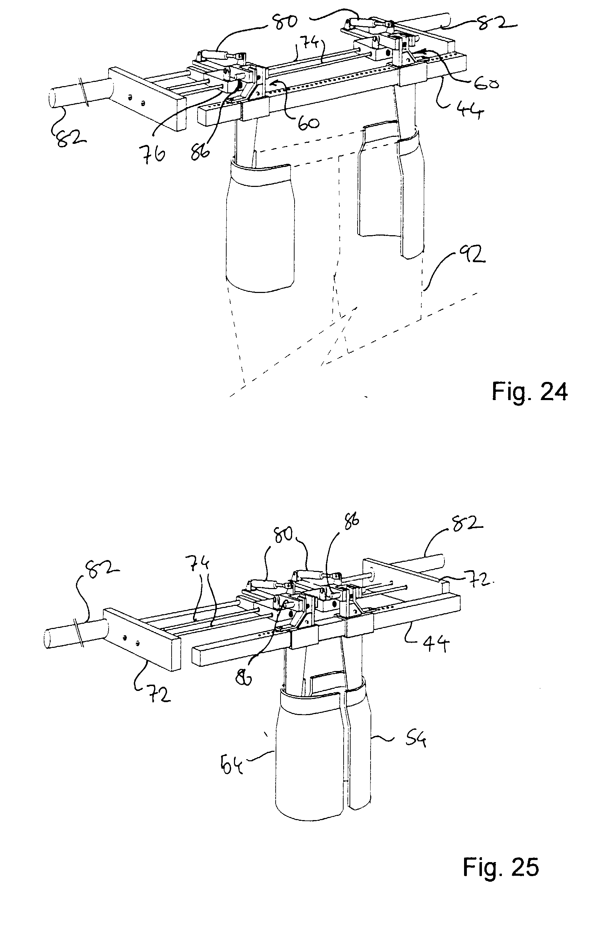

As will be seen from figures 24 and 25, the structure of an unloading station is essentially the same as that of a loading station. However, its sequence of operation is reversed.

A garment carrier 12 is received at the unloading station, as shown in Figure 24, with a garment 92 in place. Arrival is detected by a sensor. The carriages 76 are driven by the carriage cylinders 82 to align with the brackets 60. The arms 78 are then moved to engage the brackets 60, and the unlocking cylinders 86 are operated to release the garment supports 50 for travel along the lower member 44. The garment supports 50 are then urged towards the centre of the lower member (as shown in Figure 25), whereupon tension in the waistband is released, and the garment falls away.

Some detailed modifications and features of the garment carriers will now be described.

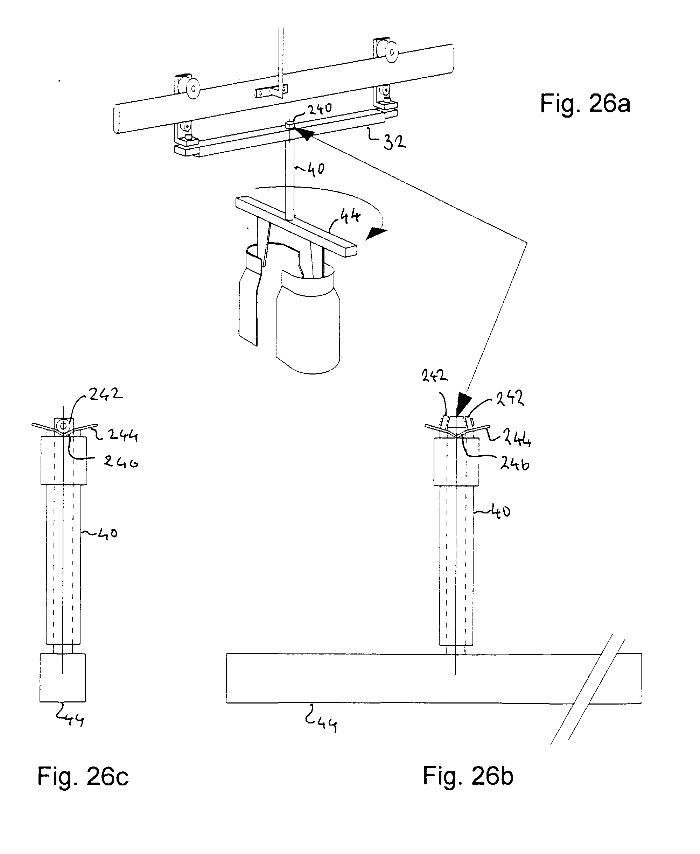

It is potentially undesirable for a garment carrier 12 to move unless the lower member 44 is aligned with the upper member 32, in order to minimise the risk of a collision occurring. With reference to Figures 26a to 26c, a garment carrier 12 is shown in which the central shaft 40 is carried on a pivot 240 which urges the lower member to return to the desired, aligned position.

A pair of rollers 242 are fixed to the central shaft 40. The rollers 242 have axes which extend generally radially of the shaft 40, the axes being fixed for rotation with the shaft 40. The rollers run on a guide plate 244 fixed to the upper member 32. The guide plate 244 has an upper surface shaped to act as a cam, whereby the shaft 40 and all of the components attached to it are lifted upwardly by the rollers 242 when the shirt 40 rotates away from the desired aligned position. By the action of gravity, the rollers 242 will tend to run downwardly on the guide plate 244, resulting in a torque being generated which urges the shaft 40 to rotate back to the aligned position. Optionally, a V-shaped notch 246 may be provided in the guide plate 244 into which the rollers 242 fall at the aligned position in order to provide secure retention of alignment of the shaft 40.

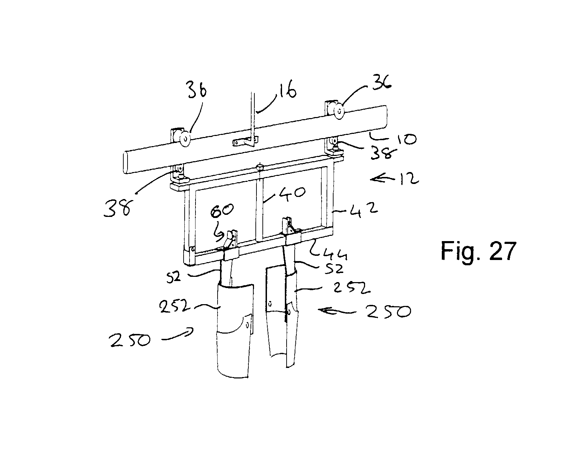

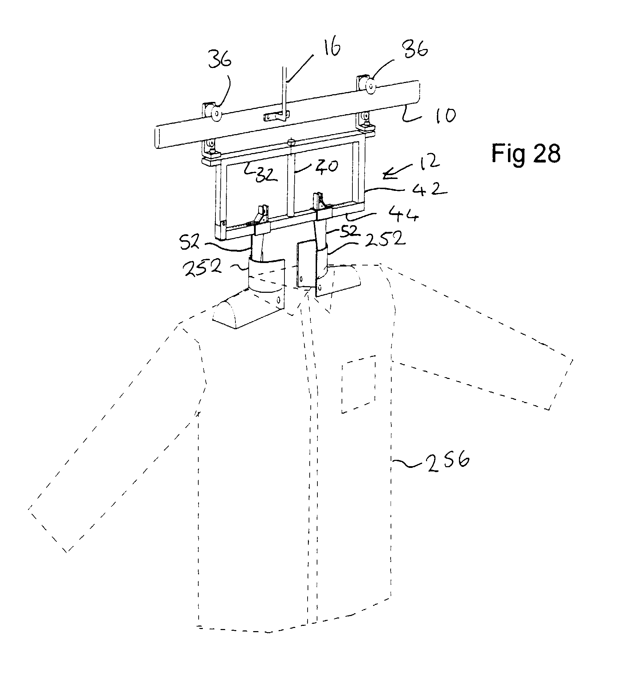

The garment hanger 12 previously described can readily be altered to carry a shirt instead of trousers or jeans, as shown in Figures 27 and 28.

Compared with the garment carrier 12 of Figure 3, the plates 54 are omitted from the altered garment carrier 12 and shoulder supports 250 are put in their place. Other components are identical.

The shoulder supports 250 comprise upper and lower plate components 252,254. The upper plate component is fixed to the supporting arm 52 such that it presents a convex outer surface, shaped to conform with a collar of a garment 256. The lower plate component 254 is secured to the upper plate component such that it can be pivoted between a retracted position (shown in Figure 27) in which it can pass through the collar of a garment 256 and an expanded position (shown in Figure 28) in which it projects to support a shoulder of a garment 256. The lower plate component 256 is biased by spring force to the expanded position.

To load the garment 256 onto the carrier 12 at a loading station an operator grasps the lower plate members 256 and passes them through the buttoned collar of a garment. On releasing the lower plate members 256, they will spring to their expanded position, so rotating the garment 256 in place. The procedure then continues as described with reference to Figure 5 and subsequent figures.

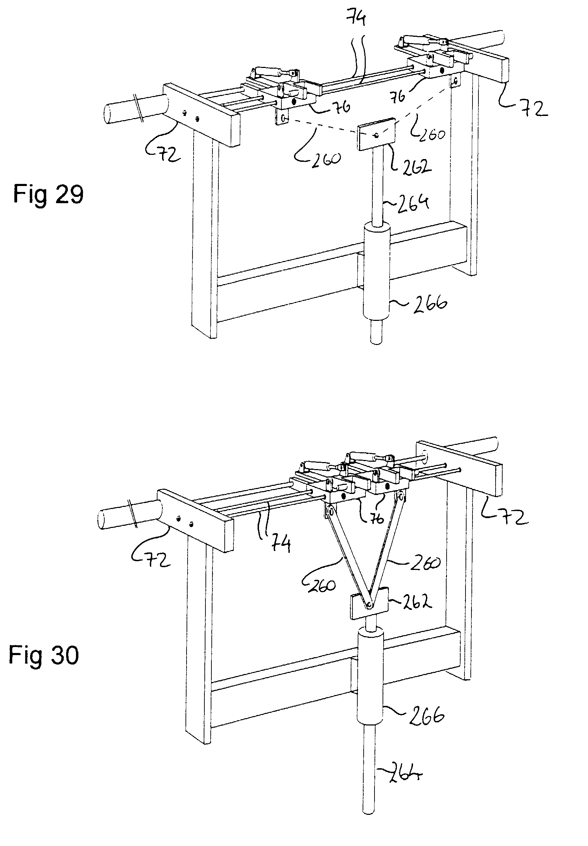

In the loading station, it is often desirable that the carriages 76 move substantially symmetrically about the centre of the rods 74. This can be achieved as illustrated in Figures 29 and 30.

Each carriage 76 has connected to it a link rod 260 which is pivotal with respect to an axis normal to the extent of the rods 74. Remote from the carriages 76, the link rods are both pivotally connected to a common connecting block 262. The connecting block 262 is carried on a vertical shaft 264 which is slidably retained in a bush 266 such that the shaft 264 can freely move in a vertical direction, but otherwise is substantially prevented from moving. The shaft 264 is disposed at the mid-point of the rods 74.

Since the link rods 260 are of fixed length, so both of the carriages are constrained to move equal distances, but in opposite directions from the mid-point of the rods 74, thus ensuring symmetry of movement.

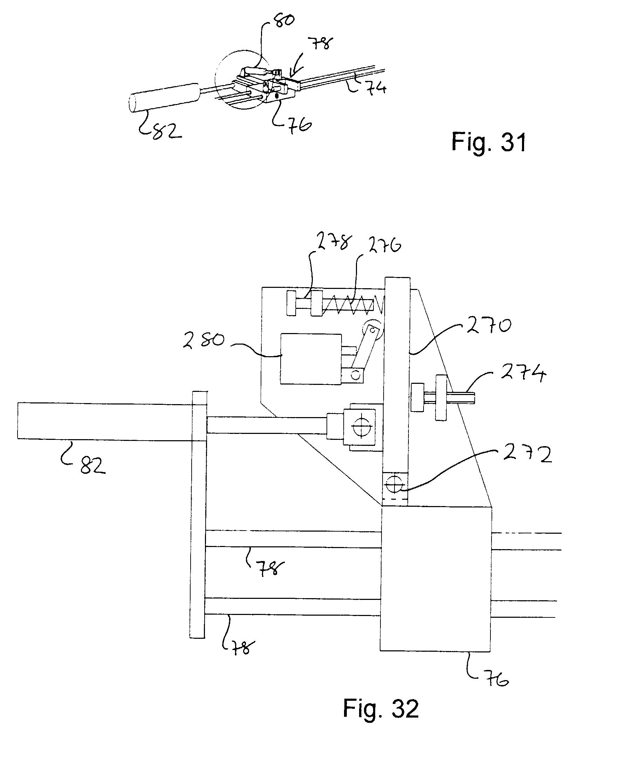

Figures 31 and 32 illustrate the manner in which the carriage cylinder 82 is connected to the carriage 76. This is a further means of achieving complete control over the waistband size and the problems of avoiding stretching of the waistband.

The device senses when the waistband is in tension. Instead of connecting the carriage cylinder 82 rigidly to the carriage assembly 76, the connection is made via a pivoting arm 270 pivoted off a bracket 272 on the carriage assembly 76. The arm 270 is restricted from movement away from the cylinder 82 by stop screw 274 and is held in position by a spring 276 and a spring pressure adjusting screw 278. A cam type pneumatic valve (or alternatively an electronic sensor) 280 is positioned next to the arm 270 to operate off the arm when the arm pivots away from the cylinder 82.

The operating sequence is as follows: With the garment 92 in the loading position the garment supports 50 move apart under the action of the carriage cylinder 82. As soon as the waistband stops the carriage movement the arm 270 connected to cylinder 82 senses the start of tension and operates the cam valve 280 which in turn stops the movement of the operating cylinder 82. The sensitivity of the movement of the carriage 76 can be adjusted by means of the spring adjusting screw 278 By using this apparatus to stop the carriages 76, even stretch type fabrics can be handled successfully.

The system as a whole is controlled by a programmable controller (not shown).

## Claims

1. A garment finishing system in which a garment is carried on a carrier between multiple processing stations, at each of which stations a finishing operation is carried out on the garment.

2. A garment finishing system according to claim 1 in which the carrier is supported for movement along a track.

3. A garment finishing system according to claim 2 in which the track forms a continuous loop.

4. A garment finishing system according to claim 2 or claim 4 which includes a multiplicity of carriers present on the track at any one time.

5. A garment finishing system according to any preceding claim in which several garments may undergo separate finishing steps at various processing stations simultaneously.

6. A garment finishing system according to any preceding claim in which the carriers interact with active components provided at fixed stations to interact with garment carriers.

7. A garment finishing system according to any preceding claim which includes stations for, amongst other operations, pressing, steam treatment, drying, inspection and labelling a garment.

8. A garment finishing system comprising a track on which is carried a plurality of garment carriers, and a loading station, a plurality of operation stations, and an unloading station spaced apart along the track, each of which garment carrier can travel along the track, between a the stations, wherein the loading station is operative to act upon a garment support of a garment carrier thereby to secure a garment to it, each operation station is operative to carry out a finishing process on a garment carried on a carrier received at the operation station, and the unloading station is operative to release a garment from a carrier received at it.

9. A garment finishing system according to claim 8 in which at least some of the loading station and the operation stations include drive means operative to drive a carrier along the track towards a subsequent station.

10. A garment finishing system according to claim 9 in which the track is an endless track, and in which a drive means is provided at the unloading station operative to return a carrier to the loading station.
